(19)

Europäisches
Patentamt
European
Patent Office
Office européen
des brevets

(11) **EP 4 733 263 A1**

(12) **EUROPEAN PATENT APPLICATION**
published in accordance with Art. 153(4) EPC

(43) Date of publication:
**29.04.2026 Bulletin 2026/18**

(21) Application number: **24825905.3**

(22) Date of filing: **18.06.2024**

(51) International Patent Classification (IPC):
***C01G 53/00*** (2025.01)    ***C01G 53/04*** (2025.01)
***C22B 3/14*** (2006.01)    ***C22B 3/44*** (2006.01)
***C22B 23/00*** (2006.01)

(52) Cooperative Patent Classification (CPC):
Y02P 10/20

(86) International application number:
**PCT/JP2024/022135**

(87) International publication number:
**WO 2024/262504 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.06.2023 JP 2023102878**

(71) Applicant: SUMITOMO METAL MINING CO., LTD.
**Tokyo
105-8716 (JP)**

(72) Inventors:
• **SENBA, Yusuke
Niihama-shi, Ehime 792-0002 (JP)**
• **TAKANO, Masatoshi
Niihama-shi, Ehime 792-0002 (JP)**
• **ITOU, Kenya
Niihama-shi, Ehime 792-0002 (JP)**
• **ASANO, Satoshi
Niihama-shi, Ehime 792-0002 (JP)**
• **WATANABE, Hiroto
Niihama-shi, Ehime 792-0002 (JP)**

(74) Representative: **Watermeyer, Nicholas
Withers & Rogers LLP
2 London Bridge
London SE1 9RA (GB)**

(54) **METHOD FOR PRODUCING HYDROXIDE CONTAINING NICKEL AND COBALT**

(57)    Disclosed herein is a method of producing, even from a raw material containing various impurities, a nickel (Ni)- and cobalt (Co)-containing hydroxide usable as a precursor of a positive electrode active material.

The method includes: washing a Ni/Co mixed hydroxide with water; alkali washing the water-washed Ni/Co mixed hydroxide for a predetermined washing time with a basic aqueous solution having a predetermined concentration and a predetermined liquid temperature; subjecting the alkali-washed Ni/Co mixed hydroxide to leaching treatment at a predetermined temperature using an aqueous ammonia solution having a predetermined ammonium carbonate and/or ammonium hydrogen carbonate concentration to obtain a Ni- and Co-containing leachate; heating the Ni- and Co-containing leachate at a predetermined temperature to deposit these Ni and Co as a hydroxide; and alkali washing the deposited hydroxide for a predetermined washing time with a basic aqueous solution having a predetermined concentration and a predetermined liquid temperature.

**EP 4 733 263 A1**

Ni/Co MIXED HYDROXIDE(MHP)

WATER

WATER WASHING PROCESS

ALKALI WASHING LIQUID

WASTEWATER(Ca,Mg)

FIRST ALKALI WASHING PROCESS

WASHING WASTEWATER

$NH_3+NH_4HCO_3$ AQUEOUS SOLUTION

LEACHING PROCESS

IMPURITY REMOVAL

LEACH RESIDUE(Mn,Fe,Al)

LEACHATE

Zn,S,Si

$NH_3,CO_2$

THERMAL DECOMPOSITION PRECIPITATION PROCESS

POST-SOLID-LIQUID SEPARATION LIQUID

FIG. 1-1

## Description

Technical Field

The present invention relates to a method for producing a hydroxide containing nickel and cobalt.

Background Art

Lithium-ion secondary batteries, which are charged and discharged through the movement of lithium ions between positive and negative electrodes, have high energy density and are less likely to deteriorate even after repeated charging and discharging, and therefore their demands have been increasing recently for use not only as batteries for electronic devices such as mobile phones and laptop computers but also as power supplies for driving electric cars and the like, storage batteries for smart grids, and the like. Lithium-ion secondary batteries have a basic structure of a positive electrode and a negative electrode facing each other with a separator sandwiched therebetween, wherein an electrolyte containing an organic electrolyte solution is filled between the positive and negative electrodes.

As an active material contained in the positive electrode, a lithium-containing metallic oxide is used which has a layered rock salt- or spinel-type crystal structure. Specific examples thereof include lithium cobalt oxide ($LiCoO_2$), lithium nickel oxide ($LiNiO_2$), ternary lithium nickel cobalt manganese oxide (NCM), lithium nickel cobalt aluminum oxide (NCA), and lithium manganese oxide ($LiMn_2O_4$), and these are appropriately used depending on their intended use or purpose. These active materials can be produced by mixing metallic hydroxide particles as a precursor and lithium hydroxide particles, and firing a mixture thereof.

The metallic hydroxide particles can be generated through crystallization by adjusting the pH of a solution containing a target metallic salt. For example, a precursor of lithium nickel cobalt manganese oxide can be generated as a mixed hydroxide containing nickel hydroxide, cobalt hydroxide, and manganese hydroxide through a neutralization reaction caused by adding an aqueous sodium hydroxide solution to an aqueous solution containing nickel sulfate, cobalt sulfate, and manganese sulfate as raw materials. Meanwhile, the neutralization reaction of a nickel sulfate as a raw material sometimes presents a problem of generating sodium sulfate (sodium sulfate decahydrate) as a by-product in an equimolar amount to nickel hydroxide as shown below by Formula 1. Specifically, in some areas, the total amount of sodium sulfate in wastewater is regulated, and therefore treatment facility needs to be installed at some expense to satisfy effluent standards or there is no choice but to limit production output of nickel hydroxide to reduce the amount of sodium sulfate to be discharged.

$$[\text{Formula 1}] \qquad NiSO_4 + 2NaOH \rightarrow Ni(OH)_2 + Na_2SO_4$$

In order to avoid the above problem, a method for producing nickel hydroxide without generating sodium sulfate as a by-product has been proposed. For example, Patent Literature 1 proposes a technique in which oxygen is introduced into an aqueous ammonia solution containing a powder of metallic nickel to allow the metallic nickel to leach out in the aqueous ammonia solution, seed crystals are added, if necessary, to the obtained aqueous ammonia solution containing nickel and hydroxyl ions, and the aqueous ammonia solution is distilled at atmospheric or reduced pressure to precipitate and collect nickel hydroxide.

Citation List

Patent Literature

Patent Literature 1: JP 10-324524 A

Summary of Invention

Technical Problem

The use of the technique proposed in Patent Literature 1 makes it possible to produce nickel hydroxide without generating sodium sulfate as a by-product, but it cannot be said that this technique proposed in Patent Literature 1 is economically advantageous because metallic nickel is used as a raw material of a precursor. Specifically, metallic nickel is generally produced by allowing nickel to leach out from an intermediate material, such as matte obtained by treating nickel ore, a sulfide, or a hydroxide, using an acid, chlorine, or the like, then separating impurities that leach out together with the nickel through purification treatment, and collecting the nickel through electrowinning. The metallic nickel finally obtained thus has the form of plates or blocks, and therefore, a process of processing plate- or block-shaped metallic nickel into a powder is necessary to allow the metallic nickel to efficiently leach out in an aqueous ammonia solution.

Some positive electrode active materials, such as NCM and NCA described above, contain cobalt. In this case, there is no particular problem even when a precursor of the positive electrode active material contains cobalt in addition to nickel. In many cases, it is rather preferable that the precursor contains cobalt to some extent. Most of the above-described raw materials used for producing metallic nickel generally contain cobalt, but cobalt is separated from nickel and removed through purification such as solvent extraction in a process before electrowinning, which as a result wastes money on separating cobalt. As described above, the method for producing nickel hydroxide by using purified metallic nickel as a raw material requires many treatment processes that cause a cost increase. Therefore, it would be advantageous from the viewpoint of production cost if a nickel- and cobalt-containing hydroxide usable as a precursor of a positive electrode active material for lithium-ion secondary batteries can be produced even by using, as a raw material, an unpurified raw material obtained by, for example, treating nickel oxide ore or scrap and thus containing various impurities in place of such purified metallic nickel.

The present invention has been made in view of the above circumstances, and it is an object of the present invention to provide a method capable of producing a nickel- and cobalt-containing hydroxide usable as a precursor of a positive electrode active material for lithium-ion secondary batteries even by using a raw material containing various impurities in a larger amount than purified metallic nickel.

Solution to Problem

In order to achieve the above object, the present invention is directed to a method for producing a nickel- and cobalt-containing hydroxide, the method including: a water washing process in which a nickel/cobalt mixed hydroxide in a particulate form is washed with water; a first alkali washing process in which the nickel/cobalt mixed hydroxide washed with water is washed for 0.50 hours or more and 2.0 hours or less with an aqueous sodium hydroxide solution having sodium hydroxide concentration of 1.0 mol/L or more and 8.0 mol/L or less and having liquid temperature of 10°C or more and 90°C or less; a leaching process in which the nickel/cobalt mixed hydroxide washed in the first alkali washing process is subjected to leaching treatment in a slurry state at a temperature of 0°C or more and 60°C or less by using an ammonia-containing aqueous solution containing ammonia water having an ammonium carbonate and/or ammonium hydrogen carbonate concentration of 0.50 mol/L or more and 4.1 mol/L or less; a thermal decomposition precipitation process in which a leachate containing nickel and cobalt obtained by the leaching treatment is heated at 60°C or more and 100°C or less for 0.50 hours or more and 2.0 hours or less to deposit these nickel and cobalt as a hydroxide; and a second alkali washing process in which the deposited hydroxide is washed for 0.50 hours or more and 2.0 hours or less with an aqueous sodium hydroxide solution having sodium hydroxide concentration of 1.0 mol/L or more and 8.0 mol/L or less and having liquid temperature of 10°C or more and 90°C or less.

Advantageous Effects of Invention

The present invention makes it possible to produce a nickel- and cobalt-containing hydroxide usable as a precursor of a positive electrode active material for lithium-ion secondary batteries even by using a raw material containing impurities in a larger amount than purified metallic nickel.

Brief Description of Drawings

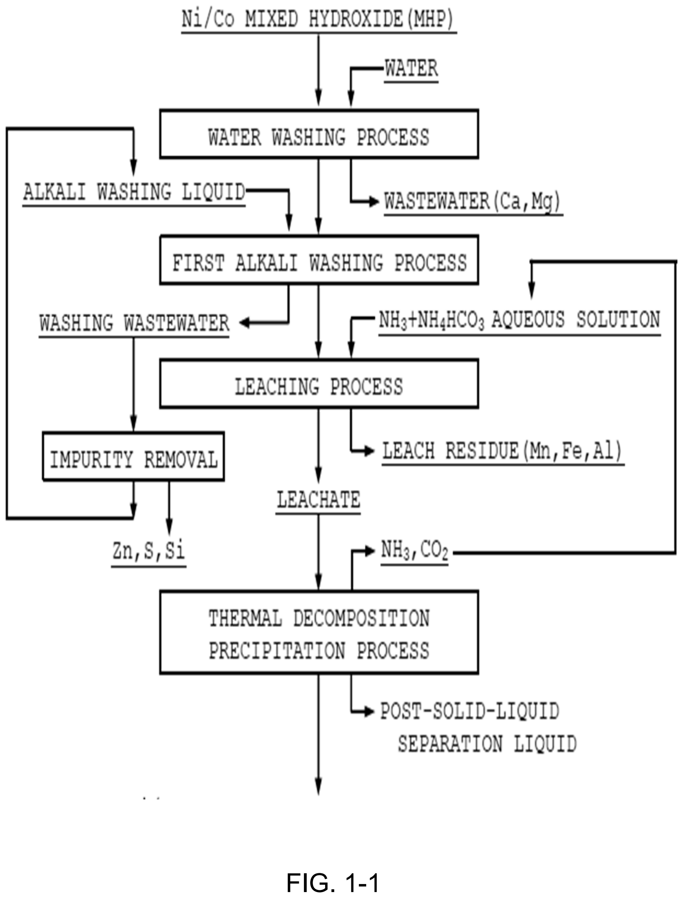

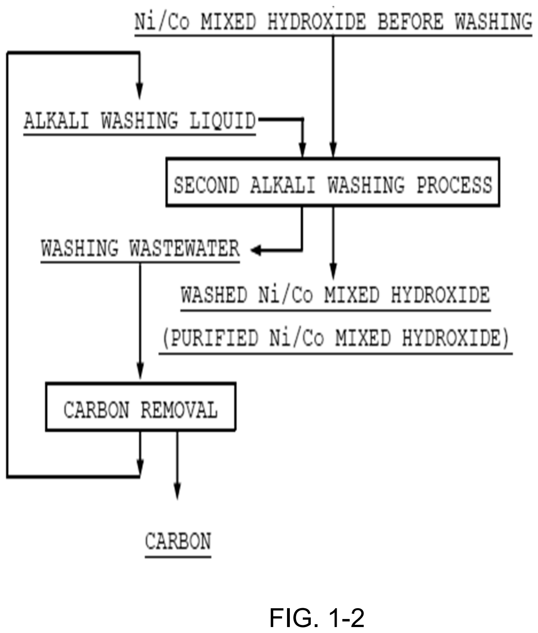

FIG. 1 is a block flowchart of an embodiment of a method for producing a nickel- and cobalt-containing hydroxide according to the present invention.

Description of Embodiments

Hereinbelow, an embodiment of a method for producing a nickel- and cobalt-containing hydroxide according to the present invention will be described with reference to FIG. 1. The method for producing a hydroxide according to the embodiment of the present invention is a method for producing a nickel- and cobalt-containing hydroxide (hereinafter also referred to as a purified nickel/cobalt mixed hydroxide) usable as a precursor of a positive electrode active material for lithium-ion secondary batteries, and the nickel- and cobalt-containing mixed hydroxide used herein as a raw material contains, in addition to nickel and cobalt as target metals, impurities such as calcium, magnesium, zinc, sulfur, silicon, manganese, iron, and aluminum. Such a nickel/cobalt mixed hydroxide containing various impurities (hereinafter also simply referred to as a nickel/cobalt mixed hydroxide) is sometimes called as a mixed hydroxide precipitate (MHP).

Specifically, the method for producing a nickel- and cobalt-containing hydroxide according to the embodiment of the present invention includes: a water washing process in which a nickel/cobalt mixed hydroxide in a particulate form is washed with water, preferably with water having ordinary temperature; a first alkali washing process in which the nickel/cobalt mixed hydroxide washed with water is washed for a predetermined period of time with an alkali washing liquid having a predetermined alkali concentration and a predetermined liquid temperature; a leaching process in which the nickel/cobalt mixed hydroxide washed in the first alkali washing process is subjected to leaching treatment using an ammonia-containing aqueous solution that contains ammonia water having a predetermined ammonium carbonate or ammonium hydrogen carbonate concentration and that has a predetermined liquid temperature to allow these nickel and cobalt to leach out in a form of ammine complexes; a thermal decomposition precipitation process in which a nickel- and cobalt-containing leachate obtained by the leaching treatment is heated under predetermined conditions to thermally decompose the ammine complexes into ammonia and carbonic acid and deposit nickel and cobalt as a hydroxide; and a second alkali washing process in which the deposited hydroxide is washed for a predetermined period of time with an alkali washing liquid having a predetermined alkali concentration and a predetermined liquid temperature. Hereinbelow, each of the series of processes will more specifically be described.

[Water washing process]

The water washing process is a process in which calcium and magnesium contained as impurities in a nickel/cobalt mixed hydroxide as a raw material in a particulate form are mainly removed using washing water. The liquid temperature of the washing water used in the water washing process is preferably 10°C or more and 90°C or less, more preferably ordinary temperature. A specific washing method includes, but not limited to an exemplary method in which a nickel/cobalt mixed hydroxide is charged into washing water previously placed in a container equipped with a stirrer, and a resultant is maintained in a slurry form for about 0.50 to 1.0 hour while being stirred with the stirrer. After the washing, the slurry is introduced into a solid-liquid separator such as a centrifugal separator or a filtration machine to perform solid-liquid separation, thereby making it possible to collect a wet nickel/cobalt mixed hydroxide subjected to water washing.

[First alkali washing process]

The first alkali washing process is a process in which zinc, sulfur, and silicon, which are impurities difficult to remove in the previous water washing process, are mainly removed using an alkali washing liquid. The type of the alkali washing liquid used in the first alkali washing process may preferably include, but not limited to an aqueous caustic soda solution. When caustic soda is used, the concentration of sodium hydroxide in the alkali washing liquid is preferably 1.0 mol/L or more and 8.0 mol/L or less. A specific example of the first alkali washing process will be described later in Reference Example 3.

The concentration of sodium hydroxide of less than 1.0 mol/L may result in an insufficient removal of zinc, sulfur, and silicon. Particularly, it is desirable that zinc is sufficiently removed in the first alkali washing process because zinc is to be incorporated or encompassed within a nickel/cobalt mixed hydroxide collected as a precipitate in the subsequent thermal decomposition precipitation process and is therefore difficult to remove even by performing washing in the second alkali washing process subsequent to the thermal decomposition precipitation process due to inhibition of contact of an alkali washing liquid with zinc in the mixed hydroxide.

On the other hand, the concentration of sodium hydroxide exceeding 8.0 mol/L may oxidize nickel hydroxide and cobalt hydroxide to generate oxides, although this concentration has an advantage that zinc, sulfur, and silicon can be sufficiently removed. The change of hydroxides to oxides as described above is likely to present a problem that nickel and cobalt are difficult to leach out in the subsequent leaching process. It should be noted that the concentration of sodium hydroxide is more preferably 4.0 mol/L or more and 8.0 mol/L or less because the above-described problem in the leaching process is likely to be avoided by suppressing the oxidation while removing zinc and sulfur. On the other hand, when the concentration of sodium hydroxide is 1.0 mol/L or more and less than 4.0 mol/L, the removal ratio of zinc is lower than that when the concentration of sodium hydroxide is 4.0 mol/L or more, but from the viewpoint of reducing loss of nickel and cobalt, a sodium hydroxide concentration of 1.0 mol/l or more and less than 4.0 mol/L is rather advantageous because oxidation tends to be suppressed. Therefore, it is preferred that the concentration of sodium hydroxide is appropriately varied depending on the intended use or purpose of a nickel- and cobalt-containing hydroxide (i.e., a purified nickel/cobalt mixed hydroxide) as a precursor of a positive electrode active material for lithium-ion secondary batteries.

The liquid temperature of the alkali washing liquid used in the first alkali washing process is preferably 10°C or more and 90°C or less, more preferably 70°C or more and 90°C or less. The liquid temperature of less than 10°C may cause insufficient removal of zinc, sulfur, and silicon. On the other hand, the liquid temperature exceeding 70°C can maintain high removal ratios of zinc, sulfur, and silicon. However, even when the liquid temperature exceeds 90°C, the removal ratios of zinc, sulfur, and silicon are not significantly increased, on the contrary, water content is excessively lost through evaporation which is disadvantageous in terms of cost.

The washing time of the first alkali washing process is preferably 0.50 hours or more and 2.0 hours or less, more preferably 0.50 hours or more and 1.0 hour or less. The washing time of 0.50 hours or more as described above can achieve the desired removal ratios of zinc, sulfur, and silicon. On the other hand, even when the washing time exceeds 1.0 hour, the removal ratios thereof are not significantly increased. That is to say, the washing time of 1.0 hour or less can efficiently remove zinc, sulfur, and silicon at low cost. It should be noted that the nickel/cobalt mixed hydroxide particles washed in the previous water washing process are often aggregated to form aggregates, and therefore if the washing time is less than 0.50 hours, the alkali washing liquid is less likely to reach into internals of the aggregates even when alkali washing is performed with stirring, and as a result, desired removal ratios cannot be achieved. On the other hand, if the washing time exceeds 2.0 hours, nickel hydroxide and cobalt hydroxide are likely to be oxidized, and the thus generated oxides of nickel and cobalt may cause difficulty in leaching in the next leaching process.

As described above, zinc is likely to be incorporated or encompassed within a nickel/cobalt mixed hydroxide generated in the thermal decomposition precipitation process, and in this case, zinc is difficult to remove even when washing is performed in the second alkali washing process subsequent to the thermal decomposition precipitation process. Therefore, it is desirable to determine various washing conditions in the first alkali washing process, that is, sodium hydroxide concentration, washing temperature, and washing time in consideration of the removal ratio of zinc in the second alkali washing process. Specifically, in order to achieve a desired zinc grade of a nickel- and cobalt-containing hydroxide obtained through the second alkali washing process, zinc is preferably removed in the first alkali washing process in such a manner that, for example, the removal ratio of zinc is preferably 15% or more, more preferably 50% or more, even more preferably about 80 to 90%.

That is, when the removal ratio of zinc and the removal ratio of sulfur in the first alkali washing process are respectively 15% or more and 75% or more, a nickel- and cobalt-containing hydroxide as a precursor of a positive electrode active material for lithium-ion secondary batteries obtained through the subsequent processes (i.e., a purified nickel/cobalt mixed hydroxide) can achieve a desired grade generally required. When the nickel- and cobalt-containing hydroxide is required to have a higher grade as a precursor of a positive electrode active material for lithium-ion secondary batteries, it is desirable to use conditions such that a zinc removal ratio of 50% or more and a sulfur removal ratio of 90% or more can be achieved in the first alkali washing process.

A specific washing method using an alkali washing liquid includes, but not limited to an exemplary method in which a nickel/cobalt mixed hydroxide is charged into an alkali washing liquid previously placed in a container equipped with a stirrer and a jacket, and a resultant is maintained in a slurry state for a predetermined period of time while being stirred under temperature control performed by, for example, introducing steam into the jacket. After the alkali washing, the slurry is introduced into a solid-liquid separator such as a centrifugal separator or a filtration machine to perform solid-liquid separation, thereby making it possible to collect a wet nickel/cobalt mixed hydroxide subjected to alkali washing.

Washing wastewater discharged as a liquid phase by the solid-liquid separation performed after the alkali washing contains impurities such as zinc, sulfur, and silicon, and therefore these impurities are preferably removed from the washing wastewater by an impurity removal method such as a precipitation method. This makes it possible to use the washing wastewater again as the alkali washing liquid. The precipitation method is a method for taking out a solute dissolved in a solution as precipitate particles, which includes a method, for example, in which the washing wastewater is transformed from an unsaturated state to an oversaturated state to promote generation and growth of crystal nuclei to obtain such precipitate particles as described above.

[Leaching process]

The leaching process is a process in which the nickel/cobalt mixed hydroxide subjected to alkali washing in the previous first alkali washing process is subjected to leaching treatment using an ammonia-containing aqueous solution. Specifically, an ammonia-containing aqueous solution is first prepared by placing water in a container equipped with a stirrer and a jacket, and adding ammonia water ($NH_4OH$) and ammonium carbonate (($NH_4)_2CO_3$) thereto. The ammonia-containing aqueous solution may be prepared using ammonium hydrogen carbonate ($NH_4HCO_3$) instead of or in addition to ammonium carbonate. It should be noted that FIG. 1 shows, as an example, a case where only ammonium hydrogen carbonate is used. Then, the nickel/cobalt mixed hydroxide particles washed in the previous first alkali washing process are charged into the container containing the ammonia-containing aqueous solution prepared in such a manner as described above, and a resultant is stirred and mixed with the stirrer to prepare a slurry having a uniform concentration.

Under this condition, the temperature of the slurry is maintained at a temperature condition of 0°C or more and 60°C or less, preferably 20°C or more and 50°C or less to perform leaching treatment. As will be described later in Reference Example 4, this makes it possible to allow nickel ions and cobalt ions to leach out from the nickel/cobalt mixed hydroxide particles. On the other hand, manganese, iron, and aluminum that hardly leach out in this leaching process remain as a leach residue. After the leaching treatment, the slurry is introduced into a solid-liquid separator such as a centrifugal separator or a filtration machine, which makes it possible to separate a leachate from the leach residue. If the temperature of the slurry is less than 0°C, the solubility of ammonium carbonate or ammonium hydrogen carbonate in water is reduced so that deposition occurs due to oversaturation, which makes it difficult to achieve successful leaching. On the other hand, if the temperature of the slurry exceeds 60°C, ammonium carbonate or ammonium hydrogen carbonate is thermally decomposed so that nickel and cobalt are both less likely to be maintained in the form of ammine complexes, which also makes it difficult to achieve successful leaching. It should be noted that when the temperature of the slurry is 20°C or more, a reaction rate can be increased, which makes it possible to increase the amount of production per unit time.

When the ammonia-containing aqueous solution is prepared using ammonium carbonate, the concentration of ammonium carbonate in the ammonia-containing aqueous solution is preferably in the range of 0.50 mol/L or more and 4.1 mol/L or less, more preferably in the range of 1.5 mol/L or more and 3.5 mol/L or less, most preferably in the range of 2.0 mol/L or more and 3.0 mol/L or less. The concentration of ammonium carbonate of less than 0.50 mol/L may hardly perform leaching, and the concentration of ammonium carbonate of less than 1.5 mol/L may reduce leaching ratio. On the other hand, even when the concentration of ammonium carbonate exceeds about 3.5 mol/L, leaching ratios hardly increase, which is rather not preferable because of chemical cost increase. Further, if the concentration of ammonium carbonate exceeds 4.1 mol/L, ammonium carbonate is deposited due to oversaturation, which may adversely affect the leaching treatment. It should be noted that the concentration of ammonium carbonate can be measured by absorptiometry, ion chromatography, or the like, and when the measurement result of the concentration of ammonium carbonate falls outside the above range, the concentration of ammonium carbonate can be adjusted by adjusting the amount of ammonium carbonate to be added.

It should be noted that also when the ammonia-containing aqueous solution is prepared using ammonium hydrogen carbonate instead of ammonium carbonate, as described above, the concentration of ammonium hydrogen carbonate in the ammonia-containing aqueous solution is preferably in the range of 0.50 mol/L or more and 4.1 mol/L or less, more preferably in the range of 1.5 mol/L or more and 3.5 mol/L or less, most preferably in the range of 2.0 mol/L or more and 3.0 mol/L or less.

Further, the free ammonia concentration of the ammonia-containing aqueous solution used for the leaching treatment is preferably in the range of 0.10 to 1.3 mol/L. This makes it possible to allow nickel and cobalt to stably leach out in the form of ammine complexes. The free ammonia concentration of less than 0.10 mol/L may cause unstable formation of ammine complexes. On the other hand, even if the free ammonia concentration exceeds 1.3 mol/L, the above-described stable leaching in the form of ammine complexes is hardly affected, which is rather not preferred because of cost increase and increase of load on wastewater treatment. It should be noted that free ammonia refers to ammonia ($NH_3$) in a molecular state, and the concentration thereof can be measured by separating $NH_3$ through distillation, then transforming $NH_3$ into $NH_4^+$, and measuring $NH_4^+$ by absorptiometry. When the free ammonia concentration falls outside the above range, it can be adjusted by adjusting the amount of ammonia water to be added.

It should be noted that the method for producing a nickel- and cobalt-containing hydroxide according to the embodiment of the present invention uses, as a raw material, a nickel/cobalt mixed hydroxide containing various impurities to be removed, and therefore the leaching process is based on the assumption that the nickel/cobalt mixed hydroxide subjected to alkali washing in the previous first alkali washing process is subjected to leaching treatment using an ammonia-containing aqueous solution. However, the leaching process is not limited thereto, and as will be described later in Reference Example 5, the leaching treatment may be performed on, for example, a nickel- and cobalt-containing mixed sulfide instead of the nickel/cobalt mixed hydroxide. In this case, the nickel- and cobalt-containing mixed sulfide can be generated by, for example, a high-pressure acid leach method called HPAL method in which acid leaching is performed by adding sulfuric acid to nickel oxide ore under high temperature and pressure. Even when the leaching treatment is performed on such a mixed sulfide, nickel and cobalt each form an ammine complex, and therefore as will be described later in Reference Example 6, nickel and cobalt can be deposited as a hydroxide and the hydroxide can be collected as a precipitate by performing thermal decomposition treatment in the thermal decomposition precipitation process subsequent to the leaching treatment.

Specifically, water is first placed in a container equipped with a stirrer, and ammonia water ($NH_4OH$) and ammonium carbonate ($(NH_4)_2CO_3$) are added thereto to prepare an ammonia-containing aqueous solution. Alternatively, the ammonia-containing aqueous solution may be prepared by adding ammonium hydrogen carbonate ($NH_4HCO_3$) instead of or in addition to ammonium carbonate. Then, nickel/cobalt mixed sulfide particles are charged into the container containing the thus prepared ammonia-containing aqueous solution, and a resultant is stirred and mixed with the stirrer to prepare a slurry having a uniform concentration. Under this codition, the slurry is subjected to leaching treatment by blowing air or oxygen gas thereinto to create oxidative conditions. This makes it possible to allow nickel ions and cobalt ions to leach out from the nickel/cobalt mixed sulfide particles.

In the leaching treatment, the temperature of the slurry is preferably maintained at a temperature condition of 20°C or more and 50°C or less, which makes it possible to promote a leaching reaction. When the ammonia-containing aqueous solution is prepared by adding ammonium carbonate for the leaching treatment, the concentration of ammonium carbonate in the ammonia-containing aqueous solution is preferably adjusted to fall within the range of 0.50 mol/L or more and 4.1 mol/L or less, more preferably within the range of 1.5 mol/L or more and 3.5 mol/L or less, most preferably within the range of 2.0 mol/L or more and 3.0 mol/L or less.

[Thermal decomposition precipitation process]

The thermal decomposition precipitation process is a process in which the leachate generated by the leaching treatment in the previous process is heated to thermally decompose the ammine complexes of nickel and cobalt to deposit these nickel and cobalt as a hydroxide and collect the hydroxide as a precipitate. In the thermal decomposition precipitation process, the leachate is preferably stirred while an oxidant such as air is blown thereinto, which promotes the oxidation of cobalt. Therefore, as will be described later in Reference Example 1, nickel and cobalt can each be collected as a hydroxide at a collection ratio of 90% or more. Specifically, thermal decomposition of the cobalt ammine complex usually produces divalent cobalt, but collection of cobalt as a hydroxide is promoted by oxidizing it to trivalent cobalt. It should be noted that ammonia and carbonic acid generated by thermal decomposition in the thermal decomposition precipitation process are preferably collected and reused as ammonia water containing ammonium carbonate or ammonium hydrogen carbonate in the previous leaching process.

In the thermal decomposition precipitation process, heating is preferably performed in such a manner that a liquid temperature is 60°C or more and 100°C or less. If the liquid temperature is less than 60°C, it is difficult to decompose the ammine complexes of nickel and cobalt, and therefore the percentages of these ammine complexes, which stably remain as they are, are high so that a precipitate is less likely to be generated. It should be noted that these ammine complexes of nickel and cobalt are more efficiently decomposed at a higher temperature, but from an economical viewpoint, a liquid temperature exceeding 100°C is not preferred because facility cost and energy cost increase.

Even when the liquid temperature is adjusted to fall within a temperature range of 60°C or more and 100°C or less in the thermal decomposition precipitation process as described above, a thermal decomposition reaction proceeds insufficiently when a holding time at such a liquid temperature is too short, which makes it difficult to achieve a desired collection ratio. Therefore, in the thermal decomposition precipitation process, the liquid temperature within a temperature range of 60°C or more and 100°C or less is preferably maintained for 0.50 hours or more and 2.0 hours or less. This makes it possible to prevent such a problem that large amounts of nickel and cobalt remain in a treated liquid after the thermal decomposition precipitation process in the form of ammine complexes, thereby increasing the collection ratio of a nickel/cobalt mixed hydroxide.

Meanwhile, in the leaching process prior to the thermal decomposition precipitation process, manganese may leach out depending on leaching conditions. In this case, similarly to nickel and cobalt, manganese as an impurity forms an ammine complex in the leachate. The manganese ammine complex is lower in thermal decomposition temperature than the ammine complexes of nickel and cobalt, and is therefore likely to be subjected to a thermal decomposition reaction prior to the ammine complexes of nickel and cobalt so that a precipitate is generated. Therefore, when the liquid temperature is within a temperature range of 60°C or more and 100°C or less as described above, a precipitate generated within less than 0.50 hours after the liquid temperature reaches the lower limit of the above temperature range is likely to contain a larger amount of manganese, and therefore the precipitate generated within less than 0.50 hours is preferably disposed of or collected and used again as a raw material in the leaching process. On the other hand, even when the holding time exceeds 2.0 hours, the amount of a nickel/cobalt mixed hydroxide precipitated hardly increases.

[Second alkali washing process]

The second alkali washing process is a process in which the nickel/cobalt mixed hydroxide collected in the previous thermal decomposition precipitation process is washed with an alkali washing liquid, which allows removing zinc, sulfur, and silicon that could not be removed in the first alkali washing process, and also removing carbon derived from ammonium carbonate or ammonium hydrogen carbonate added in the leaching process, thereby producing a high-purity nickel- and cobalt-containing hydroxide containing very few impurities (i.e., a purified nickel/cobalt mixed hydroxide) which can suitably be used for positive electrode active materials for lithium-ion secondary batteries.

The type of the alkali washing liquid used in the second alkali washing process is not limited, and similarly to the first alkali washing process described above, an aqueous caustic soda solution can be suitably used. When caustic soda is used, the concentration of sodium hydroxide in the alkali washing liquid is preferably 1.0 mol/L or more and 8.0 mol/L or less, and particularly the lower limit of the concentration of sodium hydroxide is more preferably 2.0 mol/L or more. This makes it possible to maintain high removal ratios of carbon and sulfur as impurities as will be described later in Reference Example 2.

When zinc is contained, as described above, the zinc is mainly present in such a manner that it is incorporated or encompassed within the nickel/cobalt mixed hydroxide generated in the thermal decomposition precipitation process, and therefore the removal ratio of zinc can be increased to some extent by setting the concentration of sodium hydroxide to a higher value although the removal ratio of zinc is lower than that in the first alkali washing process. The concentration of sodium hydroxide of less than 1.0 mol/L may cause insufficient removal of zinc, sulfur, and carbon. On the other hand, the concentration of sodium hydroxide exceeding 8.0 mol/L may oxidize nickel hydroxide and cobalt hydroxide to generate oxides, although this concentration has an advantage that zinc and sulfur can be sufficiently removed. In this case, the collection ratio of a hydroxide may be reduced, and in addition, the grade of a purified nickel/cobalt mixed hydroxide as a precursor may be deteriorated.

Similarly to the first alkali washing process, the liquid temperature of the alkali washing liquid in the second alkali washing process is also preferably 10°C or more and 90°C or less, more preferably 70°C or more and 90°C or less. The liquid temperature of less than 10°C may cause insufficient removal of zinc and sulfur that could not be removed in the first alkali washing process and also cause insufficient removal of carbon derived from ammonium carbonate or the like added in the leaching process. On the other hand, when the liquid temperature exceeds 70°C, the removal ratios of zinc, sulfur, and carbon can be maintained at high levels. However, even if the liquid temperature exceeds 90°C, the removal ratios of zinc, sulfur, and carbon are not significantly increased and, on the contrary, water content is excessively lost through evaporation, which is disadvantageous in terms of cost.

Similarly to the first alkali washing process, the washing time of the second alkali washing process is preferably 0.50 hours or more and 2.0 hours or less, more preferably 0.75 hours or more and 1.0 hour or less. The nickel/cobalt mixed hydroxide particles generated in the thermal decomposition precipitation process are often aggregated to form aggregates, and therefore if the washing time is less than 0.50 hours, the alkali washing liquid is less likely to reach into internals of the aggregates even when alkali washing is performed with stirring, and as a result, desired removal ratios are less likely to be achieved. On the other hand, if the washing time exceeds 2.0 hours, oxides are likely to be generated due to oxidization of nickel hydroxide and cobalt hydroxide so that the collection ratio of a hydroxide may be reduced.

A specific washing method using an alkali washing liquid includes, but not limited to a method in which, similarly to the first alkali washing process, a nickel/cobalt mixed hydroxide is charged into an alkali washing liquid previously placed in a container equipped with a stirrer and a jacket, and a resultant is maintained in a slurry state for a predetermined period of time while being stirred under temperature control performed by introducing, for example, steam into the jacket. After the alkali washing, the slurry is introduced into a solid-liquid separator such as a centrifugal separator or a filtration machine to perform solid-liquid separation, thereby making it possible to collect a wet nickel/cobalt mixed hydroxide subjected to alkali washing.

When the liquid temperature of washing wastewater discharged as a liquid phase by the solid-liquid separation after the alkali washing is reduced, the solubility of carbon in the washing wastewater is reduced. Therefore, also in this case, similarly to the first alkali washing process described above, carbon in the washing wastewater can be precipitated as sodium carbonate by a precipitation method. The washing wastewater from which sodium carbonate has been removed in such a manner can be used again as the alkali washing liquid.

As described above, the use of the method for producing a nickel- and cobalt-containing hydroxide according to the embodiment of the present invention makes it possible to produce a high-purity nickel- and cobalt-containing hydroxide containing very few impurities from a nickel/cobalt mixed hydroxide as a crude raw material typified by, for example, a nickel/cobalt mixed hydroxide precipitate (MHP) without generating sodium sulfate as a by-product. Particularly, even when the crude raw material contains various impurities such as manganese, iron, and aluminum, these impurities can be easily separated and removed, and therefore a hydroxide can be inexpensively produced as compared with a case where expensive purified metallic nickel is used as a raw material.

Further, in the method for producing a nickel- and cobalt-containing hydroxide according to the embodiment of the present invention, the raw material is washed in two steps using different washing liquids in the water washing process and the first alkali washing process prior to treatment in the thermal decomposition precipitation process. Therefore, when MHP is used as a raw material, almost all the impurities generally contained in the MHP, such as calcium, magnesium, zinc, sulfur, and silicon, can be removed. Therefore, the grade of a nickel/cobalt mixed hydroxide obtained through the thermal decomposition precipitation process can be significantly increased as compared with that of the MHP as a raw material. Hereinbelow, the present invention will be more specifically described with reference to Reference Examples and Examples, but the present invention is not limited to Reference Examples and Examples described below.

Examples

[Reference Example 1] (Test of air blowing in thermal decomposition precipitation process)

An aqueous solution containing 28.82 g of ammonium carbonate ($(NH_4)_2CO_3$) was added to a container containing 185 mL of pure water and 15 mL of ammonia water having a concentration of 25 mass% to prepare an ammonium carbonate solution having an ammonium carbonate concentration of 1.5 mol/L. Then, 20 g of a nickel/cobalt mixed hydroxide was added to the obtained ammonium carbonate solution to prepare a slurry, and the slurry was then subjected to leaching treatment by maintaining its liquid temperature at 20°C for 2.0 hours under temperature control while being stirred with a stirrer.

After the leaching treatment, a leach residue was removed by solid-liquid separation through filtration, the thus obtained leachate was placed in a 500-mL separable flask, and the liquid level of the leachate was marked so that the volume of the liquid could be checked. Then, the leachate was started to be stirred with a hot stirrer while being heated to a temperature of 80°C or more, and pure water was added thereto to make-up water that is lost through evaporation. At the time when the temperature reached 80°C, air was started to be blown into the leachate at a flow rate of 1.0 L/min. Under this condition, thermal decomposition treatment was performed for 6 hours. The thus obtained slurry containing a precipitate was filtered through a filter, and a solid phase was collected to obtain a nickel/cobalt mixed hydroxide as Sample 1. The obtained nickel/cobalt mixed hydroxide as Sample 1 was dried and then subjected to quantitative analysis by inductively-coupled plasma atomic emission spectrometry (ICP-AES) to determine the collection ratio of each of nickel and cobalt.

For the purpose of comparison, a precipitate was generated in the same manner as described above except that air blowing was not performed during the thermal decomposition treatment, and the precipitate was collected by filtration in the same manner as described above to obtain a nickel/cobalt mixed hydroxide as Sample 2. The obtained nickel/cobalt mixed hydroxide as Sample 2 was dried and subjected to quantitative analysis in the same manner as described above to determine the collection ratio of each of nickel and cobalt. The nickel collection ratio and cobalt collection ratio of each of Samples 1 and 2 are shown below in Table 1.

[Table 1]

|  | Collection ratio [%] | |
| --- | --- | --- |
|  | Ni | Co |
| Sample 1 | 98.8 | 94.6 |
| Sample 2 | 94.8 | 18.0 |

As can be seen from the results shown above in Table 1, the cobalt collection ratio of Sample 1 is significantly higher than that of Sample 2. The reason for this is due to blowing air into the leachate with stirring during the thermal decomposition treatment, which efficiently oxidizes divalent cobalt generated by thermal decomposition of an ammine complex to trivalent cobalt, and consequently collection of cobalt as a hydroxide was promoted.

[Reference Example 2] (Test of alkali washing in second alkali washing process)

(Experiment A1)

An aqueous caustic soda solution having a sodium hydroxide concentration of 4.0 mol/L was placed in a 50-mL beaker, and 5 g of a nickel/cobalt mixed hydroxide collected after the thermal decomposition treatment in Reference Example 1 described above was added thereto to prepare a slurry. The slurry was maintained at a liquid temperature of 80°C for 1.0 hour under temperature control while being stirred and mixed to subject the mixed hydroxide to alkali washing. After the alkali washing, the slurry was subjected to solid-liquid separation by filtration to remove washing wastewater containing impurities, thereby obtaining a nickel- and cobalt-containing hydroxide.

(Experiment A2)

The nickel/cobalt mixed hydroxide was treated in the same manner as in Experiment A1 described above except that 50 mL of a 6.0 mol/L aqueous caustic soda solution was used instead of the aqueous caustic soda solution having a sodium hydroxide concentration of 4.0 mol/L.

(Experiment A3)

The nickel/cobalt mixed hydroxide was treated in the same manner as in Experiment A1 described above except that 50 mL of an 8.0 mol/L aqueous caustic soda solution was used instead of the aqueous caustic soda solution having a sodium hydroxide concentration of 4.0 mol/L.

The conditions of alkali washing, the removal ratios of zinc, sulfur, and carbon by the alkali washing, and the zinc, sulfur, and carbon percentage of content of the mixed hydroxide after the alkali washing of each of Experiments A1 to A3 described above are shown below in Table 2. The removal ratios shown in Table 2 were determined from a material balance based on zinc, sulfur, and carbon contents obtained by subjecting each of the post-washing liquid (washing wastewater) and the mixed hydroxide (Ni/Co mixed hydroxide) after washing to quantitative analysis. For example, the removal ratio of zinc was calculated in the following manner. A zinc content $L_{Zn}$ was determined by multiplying a zinc concentration determined by subjecting the post-washing liquid to quantitative analysis by the amount of the post-washing liquid, a zinc content $S_{Zn}$ was determined by multiplying a percentage of content of zinc determined by subjecting the mixed hydroxide after washing (dry matter) to quantitative analysis by the dry mass of the mixed hydroxide, and these contents $L_{Zn}$ and $S_{Zn}$ were both substituted into Formula 2 shown below.

[Formula 2]

$$\text{Removal ratio} = L_{Zn}/(L_{Zn} + S_{Zn}) \cdot 100$$

[Table 2-1]

| | Alkali washing conditions | | | |
|---|---|---|---|---|
| | NaOH Concentration [mol/L] | Washing temperature [°C] | Washing time [h] | Slurry Concentration [g/L] |
| Mixed hydroxide | - | - | - | - |
| Experiment A1 | 4.0 | 80 | 1.0 | 100 |
| Experiment A2 | 8.0 | 80 | 1.0 | 100 |
| Experiment A3 | 6.0 | 80 | 1.0 | 100 |

[Table 2-2]

| Content [g] | | | Content [g] | | | Removal ratio [%] | | | Percentage of content [mass%] | | |
|---|---|---|---|---|---|---|---|---|---|---|---|
| Washing wastewater | | | Ni/Co mixed hydroxide | | | | | | | | |
| Zn | S | C | Zn | S | C | Zn | S | C | Zn | S | C |
| | | | | | | - | - | | 0.87 | 0.630 | 4.10 |
| 0.005 | 0.026 | 0.182 | 0.038 | 0.0003 | 0.023 | 10.6 | 99.0 | 89.0 | 0.98 | 0.007 | 0.58 |
| 0.011 | 0.025 | 0.178 | 0.034 | 0.0003 | 0.027 | 24.4 | 98.8 | 87.1 | 0.81 | 0.007 | 0.63 |
| 0.015 | 0.024 | 0.167 | 0.030 | 0.0020 | 0.038 | 33.7 | 94.1 | 81.4 | 0.59 | 0.030 | 0.76 |

As can be seen from Table 2 shown above, the carbon and sulfur removal ratios can be maintained at 80% or more by performing alkali washing using an aqueous caustic soda solution having a sodium hydroxide concentration of 4.0 mol/L or more and 8.0 mol/L or less, and the zinc removal ratio can be increased by increasing the concentration of sodium hydroxide. The zinc removal ratios were inferior to those in Reference Example 3 that will be described later. The reason for this is due to incorporated or encompassed state of zinc within the nickel/cobalt mixed hydroxide collected in the thermal decomposition precipitation process, which causes difficulty for the alkali washing liquid to come into contact with zinc. It should be noted that all the mixed hydroxides obtained in Experiments A1 to A3 had a grade usable as a material for a positive electrode active material for lithium-ion secondary batteries.

[Reference Example 3] (Test of alkali washing in first alkali washing process)

(Experiment B1)

First, 400 g (dry weight) of MHP as a raw material and 1.85 L of pure water were placed in a beaker to prepare a slurry, and then the slurry was maintained at a temperature of 20°C for 30 minutes while being stirred and mixed to perform water washing treatment. After the water washing treatment, the washing liquid was separated and removed by filtration, 14 g of the nickel/cobalt mixed hydroxide as solid matter was added to a beaker containing 140 mL of an aqueous caustic soda solution having a sodium hydroxide concentration of 6.0 mol/L to prepare a slurry, and the slurry was maintained at a liquid temperature of 20°C for 2.0 hours under temperature control while being stirred and mixed to perform alkali washing. After the alkali washing, the slurry was subjected to solid-liquid separation by filtration to remove washing wastewater containing impurities, thereby obtaining a nickel/cobalt mixed hydroxide.

(Experiment B2)

A nickel/cobalt mixed hydroxide was subjected to water washing treatment and alkali washing treatment in the same manner as in Experiment B1 except that the liquid temperature during alkali washing was changed from 20°C to 80°C.

(Experiment B3)

A nickel/cobalt mixed hydroxide was subjected to water washing treatment and alkali washing treatment in the same manner as in Experiment B1 except that 140 mL of an aqueous caustic soda solution having a sodium hydroxide concentration of 4.0 mol/L was used instead of the aqueous caustic soda solution having a sodium hydroxide concentration of 6.0 mol/L, and that the temperature during alkali washing was changed from 20°C to 80°C, and that the holding time for alkali washing was changed from 2.0 hours to 1.0 hour.

(Experiment B4)

A nickel/cobalt mixed hydroxide was subjected to water washing treatment and alkali washing treatment in the same manner as in Experiment B1 except that the liquid temperature during alkali washing was changed from 20°C to 80°C, and that the holding time for alkali washing was changed from 2.0 hours to 1.0 hour.

(Experiment B5)

A nickel/cobalt mixed hydroxide was subjected to water washing treatment and alkali washing treatment in the same manner as in Experiment B4 except that 140 mL of an aqueous caustic soda solution having a sodium hydroxide concentration of 8.0 mol/L was used instead of the aqueous caustic soda solution having a sodium hydroxide concentration of 6.0 mol/L.

(Experiment B6)

A nickel/cobalt mixed hydroxide was subjected to water washing treatment and alkali washing treatment in the same manner as in Experiment B3 except that the holding time for alkali washing was changed from 1.0 hour to 0.50 hours.

(Experiment B7)

A nickel/cobalt mixed hydroxide was subjected to water washing treatment and alkali washing treatment in the same manner as in Experiment B3 except that the holding time for alkali washing was changed from 1.0 hour to 2.0 hours.

(Experiment B8)

A nickel/cobalt mixed hydroxide was subjected to water washing treatment and alkali washing treatment in the same manner as in Experiment B4 except that the holding time for alkali washing was changed from 1.0 hour to 0.50 hours.

(Experiment B9)

A nickel/cobalt mixed hydroxide was subjected to water washing treatment and alkali washing treatment in the same manner as in Experiment B4 except that the holding time for alkali washing was changed from 1.0 hour to 2.0 hours.

(Experiment B10)

A nickel/cobalt mixed hydroxide was subjected to water washing treatment and alkali washing treatment in the same manner as in Experiment B5 except that the holding time for alkali washing was changed from 1.0 hour to 0.50 hours.

(Experiment B11)

A nickel/cobalt mixed hydroxide was subjected to water washing treatment and alkali washing treatment in the same manner as in Experiment B5 except that the holding time for alkali washing was changed from 1.0 hour to 2.0 hours.
The conditions of alkali washing, the removal ratios of zinc and sulfur by the alkali washing, and the percentages of content of zinc, sulfur, and carbon in the mixed hydroxide (Ni/Co mixed hydroxide) after the alkali washing of each of Experiments B1 to B11 described above are shown below in Table 3. It should be noted that the removal ratios and the percentages of content shown in Table 3 were determined in the same manner as in Reference Example 2.

[Table 3-1]

| | Alkali washing conditions | | | |
|---|---|---|---|---|
| | NaOH Concentration [mol/L] | Washing temperature [°C] | Washing time [h] | Slurry Concentration [g/L] |
| Mixed hydroxide | - | - | - | - |
| Experiment B1 | 6.0 | 20 | 2.0 | 100 |
| Experiment B2 | 6.0 | 80 | 2.0 | 100 |
| Experiment B3 | 4.0 | 80 | 1.0 | 100 |
| Experiment B4 | 6.0 | 80 | 1.0 | 100 |
| Experiment B5 | 8.0 | 80 | 1.0 | 100 |
| Experiment B6 | 4.0 | 80 | 0.50 | 100 |
| Experiment B7 | 4.0 | 80 | 2.0 | 100 |
| Experiment B8 | 6.0 | 80 | 0.50 | 100 |
| Experiment B9 | 6.0 | 80 | 2.0 | 100 |
| Experiment B10 | 8.0 | 80 | 0.50 | 100 |
| Experiment B11 | 8.0 | 80 | 2.0 | 100 |

[Table 3-2]

| Content [g] | | Content [g] | | Removal ratio [%] | | Percentage of content [mass%] | |
|---|---|---|---|---|---|---|---|
| Washing wastewater | | Ni/Co Mixed hydroxide | | | | | |
| Zn | S | Zn | S | Zn | S | Zn | S |
| | | | | - | - | 0.67 | 3.90 |
| 0.005 | 0.146 | 0.028 | 0.049 | 15.2 | 75.0 | 0.64 | 1.10 |
| 0.022 | 0.189 | 0.011 | 0.006 | 66.2 | 96.7 | 0.28 | 0.16 |
| 0.046 | 0.490 | 0.045 | 0.022 | 50.7 | 95.6 | 0.40 | 0.20 |
| 0.059 | 0.479 | 0.029 | 0.017 | 67.2 | 96.6 | 0.26 | 0.15 |
| 0.072 | 0.468 | 0.019 | 0.034 | 79.2 | 93.3 | 0.14 | 0.25 |
| 0.037 | 0.327 | 0.033 | 0.018 | 52.9 | 94.7 | 0.41 | 0.23 |
| 0.039 | 0.327 | 0.033 | 0.013 | 54.0 | 96.1 | 0.40 | 0.16 |
| 0.046 | 0.317 | 0.024 | 0.012 | 66.2 | 96.3 | 0.23 | 0.12 |
| 0.053 | 0.327 | 0.017 | 0.007 | 75.8 | 97.8 | 0.22 | 0.093 |
| 0.054 | 0.317 | 0.014 | 0.010 | 79.8 | 97.0 | 0.17 | 0.12 |
| 0.057 | 0.314 | 0.014 | 0.028 | 80.7 | 91.8 | 0.14 | 0.29 |

As can be seen from Table 3 shown above, zinc and sulfur can be removed at a removal ratio of 15% or more and a removal ratio of 75% or more, respectively by performing alkali washing using an aqueous caustic soda solution having a sodium hydroxide concentration of 4.0 mol/L or more and 8.0 mol/L or less under conditions of a liquid temperature during washing of 20°C or more and 80°C or less and a washing time of 0.50 hours or more and 2.0 hours or less.

[Reference Example 4] (Test of leaching with ammonium carbonate in leaching process)

(Experiment C1)

An aqueous solution containing 28.82 g of ammonium carbonate $((NH_4)_2CO_3)$ was added to a container containing 185 mL of pure water and 15 mL of ammonia water having a concentration of 25 mass% to prepare an ammonia-containing aqueous solution having an ammonium carbonate concentration of 1.5 mol/L. The obtained ammonia-containing aqueous solution was mixed with 20 g of a powdery nickel/cobalt mixed hydroxide (MHP) having a composition shown below in Table 4 to prepare a slurry, and the slurry was maintained at a liquid temperature of 20°C for 2.0 hours while being stirred with a stirrer to perform leaching treatment.

[Table 4]

| | Ni | Co | Mn | Fe | Mg | Si | Zn | Ca | Cu | Al | S |
|---|---|---|---|---|---|---|---|---|---|---|---|
| Composition [mass%] | 39 | 3.2 | 5.6 | 0.039 | 1.6 | 0.33 | 0.67 | 0.19 | 0.014 | 0.029 | 5.1 |

After the leaching treatment, solid-liquid separation was performed by filtration to obtain a leach residue having a dry mass of 10.8 g and 270 mL of a leachate. The element concentrations of these leach residue and leachate were measured by inductively-coupled plasma atomic emission spectrometry (ICP-AES), and the leaching ratio of each element was determined by Formula 3 shown below.

Leaching ratio of element $\alpha$ = Mass of element $\alpha$ in leachate/(Mass of element $\alpha$ in leachate + Mass of element $\alpha$ in leach residue) $\times$ 100                    [Formula 3]

As a result, the leaching ratio of nickel was 71.2% and the leaching ratio of cobalt was 65.3%. That is, a leachate composed of an aqueous ammonia solution containing a large amount of nickel and cobalt ions could be produced.

(Experiment C2)

Leaching treatment of MHP and subsequent solid-liquid separation were performed in the same manner as in Experiment C1 except that the amount of ammonium carbonate ($(NH_4)_2CO_3$) added was changed from 28.82 g to 57.65 g to prepare an ammonia-containing aqueous solution having an ammonium carbonate concentration of 3.0 mol/L, and as a result, a leach residue having a dry mass of 6.30 g and 310 mL of a leachate were obtained. The element concentrations of the obtained leach residue and leachate were measured in the same manner as in Experiment C1, and as a result, the leaching ratio of nickel was 90.3% and the leaching ratio of cobalt was 84.6%. That is, a leachate composed of an aqueous ammonia solution containing a large amount of nickel and cobalt ions could be produced.

(Experiment C3)

Leaching treatment of MHP and subsequent solid-liquid separation were performed in the same manner as in Experiment C1 except that the amount of ammonium carbonate ($(NH_4)_2CO_3$) added was changed from 28.82 g to 115.30 g to prepare an ammonia-containing aqueous solution having an ammonium carbonate concentration of 4.1 mol/L, and as a result, a leach residue having a dry mass of 5.53 g and 355 mL of a leachate were obtained. The element concentrations of the obtained leach residue and leachate were measured in the same manner as in Experiment C1, and as a result, the leaching ratio of nickel was 94.4% and the leaching ratio of cobalt was 88.9%. That is, a leachate composed of an aqueous ammonia solution containing a large amount of nickel and cobalt ions could be produced.

(Experiment C4)

Leaching treatment of MHP and subsequent solid-liquid separation were performed in the same manner as in Experiment C1 except that the liquid temperature during leaching treatment was changed from 20°C to 50°C, and as a result, a leach residue having a dry mass of 6.07 g and 203 mL of a leachate were obtained. The element concentrations of the obtained leach residue and leachate were measured in the same manner as in Experiment C1, and as a result, the leaching ratio of nickel was 73.9% and the leaching ratio of cobalt was 73.6%. That is, a leachate composed of an aqueous ammonia solution containing a large amount of nickel and cobalt ions could be produced.

(Experiment C5)

Leaching treatment of MHP and subsequent solid-liquid separation were performed in the same manner as in Experiment C2 except that the liquid temperature during leaching treatment was changed from 20°C to 50°C, and as a result, a leach residue having a dry mass of 3.57 g and 235 mL of a leachate were obtained. The element concentrations of the obtained leach residue and leachate were measured in the same manner as in Experiment C1, and as a result, the leaching ratio of nickel was 92.5% and the leaching ratio of cobalt was 87.3%. That is, a leachate composed of an aqueous ammonia solution containing a large amount of nickel and cobalt ions could be produced.

(Experiment C6)

Leaching treatment of MHP and subsequent solid-liquid separation were performed in the same manner as in Experiment C3 except that the liquid temperature during leaching treatment was changed from 20°C to 50°C, and as a result, a leach residue having a dry mass of 5.05 g and 415 mL of a leachate were obtained. The element concentrations of the obtained leach residue and leachate were measured in the same manner as in Experiment C1, and as a result, the leaching ratio of nickel was 95.2% and the leaching ratio of cobalt was 89.2%. That is, a leachate composed of an aqueous ammonia solution containing a large amount of nickel and cobalt ions could be produced.

(Experiment C7)

Ammonia water having a concentration of 25% placed in a container was mixed with 20 g of a powdery nickel/cobalt mixed hydroxide (MHP) having a composition shown above in Table 4 to prepare a slurry, and the slurry was maintained at a liquid temperature of 20°C for 2.0 hours under temperature control while being stirred with a stirrer to perform leaching treatment. Then, solid-liquid separation was performed in the same manner as in Experiment C1 to obtain 150 mL of a leachate. The element concentrations of the leachate were measured in the same manner as in Experiment C1 to determine the leaching ratio of each element.

As a result, the leaching ratio of nickel was 14.6% and the leaching ratio of cobalt was 0.2%. That is, as compared to Experiments C1 to C3 in which leaching treatment was performed at the same temperature, leaching of nickel ions was insufficient and cobalt ions hardly leached out. It should be noted that in Experiment C7, the leaching ratio of each element was determined by Formula 4 shown below.

[Formula 4]

Leaching ratio of element α = Mass of element α in

leachate/Mass of element α in MHP × 100

(Experiment C8)

Leaching treatment of MHP and subsequent solid-liquid separation and concentration measurement were performed in the same manner as in Experiment C7 except that the liquid temperature during leaching treatment was changed from 20°C to 50°C, and as a result, the leaching ratio of nickel was 17.5% and the leaching ratio of cobalt was 0.3%. That is, as compared to Experiments C4 to C6 in which leaching treatment was performed at the same temperature, leaching of nickel ions was insufficient, and cobalt ions hardly leached out. It should be noted that the leaching ratios were calculated in the same manner as in Experiment C7. The measurement results of Experiments C1 to C8 described above are summarized below in Table 5.

[Table 5-1]

| | | | Ni | Co | Mn | Fe | Mg | Si | Zn | Ca | Cu | Al | S |
|---|---|---|---|---|---|---|---|---|---|---|---|---|---|
| Experiment C1 (20°C) | Element concentration | Leachate | g/L | 32 | 2.4 | 0.25 | 0.001 | 0.25 | 0.015 | 0.50 | 0.013 | 0.015 | 0.001 | 3.6 |
| | | Leach residue | mass% | 32 | 3.2 | 16 | 0.16 | 0.76 | 1.3 | 0.75 | 0.19 | 0.050 | 0.11 | 1.2 |
| | Leaching ratio | | % | 71.2 | 65.3 | 3.8 | 1.5 | 45.2 | 2.8 | 62.6 | 14.6 | 42.9 | 2.2 | 88.3 |
| Experiment C2 (20°C) | Element concentration | Leachate | g/L | 38 | 2.8 | 0.27 | 0.001 | 0.054 | 0.028 | 0.69 | 0.012 | 0.014 | 0.001 | 3.6 |
| | | Leach residue | mass% | 20 | 2.5 | 27 | 0.27 | 1.7 | 2.1 | 0.33 | 0.29 | 0.050 | 0.2 | 0.73 |
| | Leaching ratio | | % | 90.3 | 84.6 | 4.7 | 1.8 | 13.5 | 6.2 | 91.1 | 16.9 | 57.9 | 2.4 | 96.0 |
| Experiment C3 (20°C) | Element concentration | Leachate | g/L | 34 | 2.5 | 0.3 | 0.001 | 0.004 | 0.044 | 0.62 | 0.021 | 0.012 | 0.001 | 3.1 |
| | | Leach residue | mass% | 13 | 2.0 | 31 | 0.3 | 2.6 | 2.2 | 0.2 | 0.23 | 0.050 | 0.23 | 0.81 |
| | Leaching ratio | | % | 94.4 | 88.9 | 5.8 | 2.1 | 1.0 | 11.4 | 95.2 | 37.0 | 60.6 | 2.7 | 96.1 |
| Experiment C4 (50°C) | Element concentration | Leachate | g/L | 25 | 2.0 | 0.028 | 0.001 | 0.14 | 0.006 | 0.64 | 0.003 | 0.014 | 0.001 | 2.1 |
| | | Leach residue | mass% | 29 | 2.4 | 17 | 0.18 | 0.86 | 1.4 | 0.64 | 0.23 | 0.05 | 0.11 | 0.98 |
| | Leaching ratio | | % | 73.9 | 73.6 | 0.5 | 1.8 | 35.3 | 1.4 | 77.0 | 4.2 | 48.4 | 3.0 | 87.8 |

[Table 5-2]

| | | | | | | | | | | | | | | |
|---|---|---|---|---|---|---|---|---|---|---|---|---|---|---|
| Experiment C5 (50°C) | Element concentration | Leachate | g/L | 28 | 2.2 | 0.039 | 0.001 | 0.16 | 0.027 | 0.71 | 0.001 | 0.013 | 0.001 | 1.9 |
| | | Leach residue | mass% | 15 | 2.1 | 29 | 0.3 | 1.2 | 2.2 | 0.48 | 0.32 | 0.05 | 0.19 | 0.71 |
| | Leaching ratio | | % | 92.5 | 87.3 | 0.9 | 2.1 | 46.7 | 7.5 | 90.7 | 2.0 | 63.1 | 3.3 | 94.6 |
| Experiment C6 (50°C) | Element concentration | Leachate | g/L | 27 | 2.0 | 0.22 | 0.001 | 0.29 | 0.054 | 0.48 | 0.006 | 0.011 | 0.001 | 2.4 |
| | | Leach residue | mass% | 11 | 2 | 33 | 0.32 | 1.3 | 2.2 | 0.24 | 0.5 | 0.05 | 0.23 | 0.79 |
| | Leaching ratio | | % | 95.2 | 89.2 | 5.2 | 2.5 | 64.7 | 16.8 | 94.3 | 9.0 | 64.4 | 3.4 | 96.1 |
| Experiment C7 (20°C) | Element concentration | Leachate | g/L | 7.6 | 0.009 | - | - | - | - | - | - | - | - | - |
| | Leaching ratio | | % | 14.6 | 0.2 | - | - | - | - | - | - | - | - | - |
| Experiment C8 (50°C) | Element concentration | Leachate | g/L | 9.1 | 0.013 | 0.001 | 0.001 | 0.001 | 0.005 | 0.033 | 0.001 | 0.001 | 0.001 | 2.2 |
| | Leaching ratio | | % | 17.5 | 0.3 | 0.0 | 1.9 | 0.0 | 1.1 | 3.7 | 0.4 | 5.4 | 2.6 | 32.4 |

[Reference Example 5] (Leaching test of Ni/Co mixed sulfide (MS) by oxygen blowing)

(Experiment D1)

An aqueous solution containing 28.82 g of ammonium carbonate ($(NH_4)_2CO_3$) was added to a container containing 185 mL of pure water and 15 mL of ammonia water having a concentration of 25 mass% to prepare an ammonia-containing aqueous solution having an ammonium carbonate concentration of 1.5 mol/L. The obtained ammonia-containing aqueous solution was mixed with 18 g of a powdery nickel/cobalt mixed sulfide (MS) having a composition shown below in Table 6 to prepare a slurry. The slurry was stirred with a stirrer while oxygen gas was blown thereinto from an oxygen tank at a flow rate of 1 L/min, and at the same time, the slurry was maintained at a liquid temperature of 50°C for 2 hours to perform leaching treatment.

[Table 6]

|  | Ni | Co | Mn | Fe | Mg | Si | Zn | Ca | Cu | Al | S |
|---|---|---|---|---|---|---|---|---|---|---|---|
| Composition (mass%) | 58 | 4.7 | 0.002 | 0.25 | 0.007 | <0.001 | 0.011 | <0.001 | 0.001 | 0.004 | 35 |

After the leaching treatment, solid-liquid separation was performed by filtration to obtain a leach residue having a dry mass of 15.2 g and 205 mL of a leachate. The element concentrations of these leach residue and leachate were measured by inductively-coupled plasma atomic emission spectrometry (ICP-AES), and the leaching ratio of each element was determined by Formula 5 shown below.

Leaching ratio of element $\alpha$ = Mass of element $\alpha$ in leachate/(Mass of element $\alpha$ in leachate + Mass of element $\alpha$ in leach residue) $\times$ 100 [Formula 5]

As a result, the leaching ratio of nickel was 18.3% and the leaching ratio of cobalt was 7.2%. That is, a leachate composed of an aqueous ammonia solution containing a large amount of nickel and cobalt ions could be produced.

(Experiment D2)

Leaching treatment of MS and subsequent solid-liquid separation were performed in the same manner as in Experiment D1 except that the amount of ammonium carbonate ($(NH_4)_2CO_3$) added was changed from 28.82 g to 57.65 g to prepare an ammonia-containing aqueous solution having an ammonium carbonate concentration of 3.0 mol/L, and as a result, a leach residue having a dry mass of 9.80 g and 238 mL of a leachate were obtained. The element concentrations of the obtained leach residue and leachate were measured in the same manner as in Experiment D1, and as a result, the leaching ratio of nickel was 44.7% and the leaching ratio of cobalt was 24.5%. That is, a leachate composed of an aqueous ammonia solution containing a large amount of nickel and cobalt ions could be produced.

(Experiment D3)

Leaching treatment of MS and subsequent solid-liquid separation were performed in the same manner as in Experiment D1 except that the amount of ammonium carbonate ($(NH_4)_2CO_3$) added was changed from 28.82 g to 115.30 g to prepare an ammonia-containing aqueous solution having an ammonium carbonate concentration of 4.1 mol/L, and as a result, a leach residue having a dry mass of 7.84 g and 200 mL of a leachate were obtained. The element concentrations of the obtained leach residue and leachate were measured in the same manner as in Experiment D1, and as a result, the leaching ratio of nickel was 45.1% and the leaching ratio of cobalt was 39.4%. That is, a leachate composed of an aqueous ammonia solution containing a large amount of nickel and cobalt ions could be produced.

(Experiment D4)

Leaching treatment of MS and subsequent solid-liquid separation were performed in the same manner as in Experiment D2 except that the liquid temperature during leaching treatment was changed from 50°C to 20°C, and as a result, a leach residue having a dry mass of 12.6 g and 220 mL of a leachate were obtained. The element concentrations of the obtained leach residue and leachate were measured in the same manner as in Experiment D1, and as a result, the leaching ratio of nickel was 27.7% and the leaching ratio of cobalt was 21.6%. That is, a leachate composed of an aqueous ammonia solution containing a large amount of nickel and cobalt ions could be produced.

(Experiment D5)

Experiment D5 was performed in the same manner as Experiment D1 except that ammonium hydrogen carbonate was used in the leaching treatment instead of ammonium carbonate used in Experiment D1. As a result, it could be confirmed that a leachate almost comparable to that obtained in Experiment D1, that is, a leachate composed of an aqueous ammonia solution containing a large amount of nickel and cobalt ions could be produced.

(Experiment D6)

Leaching treatment of MS and subsequent solid-liquid separation were performed in the same manner as in Experiment D1 except that 200 mL of ammonia water having a concentration of 25% was used as a leaching liquid instead of the ammonia-containing aqueous solution containing ammonium carbonate, and as a result, 200 mL of a leachate was obtained. The element concentrations of the leachate were measured in the same manner as in Experiment D1 to determine the leaching ratio of each element. As a result, the leaching ratio of nickel was 14.6% and the leaching ratio of cobalt was 0.2%. That is, as compared to Experiments D1 to D3 in which leaching treatment was performed at the same temperature, leaching of nickel ions was insufficient and cobalt ions hardly leached out. It should be noted that in Experiment D6, the leaching ratio of each element was determined by Formula 6 shown below.

```
[Formula 6]

        Leaching ratio of element α = Mass of element α in

leachate/Mass of element α in MS × 100
```

(Experiment D7)

Leaching treatment of MS and subsequent solid-liquid separation and concentration measurement were performed in the same manner as in Experiment D6 except that the liquid temperature during leaching treatment was changed from 50°C to 20°C, and as a result, the leaching ratio of nickel was 14.6% and the leaching ratio of cobalt was 0.2%. That is, as compared to Experiment D4 in which leaching treatment was performed at the same temperature, leaching of nickel ions was insufficient and cobalt ions hardly leached out. It should be noted that the leaching ratios were calculated in the same manner as in Experiment D6. The measurement results of Experiments D1 to D7 described above, excluding Experiment D5, are summarized below in Table 7.

[Table 7-1]

| | | | | Ni | Co | Mn | Fe | Mg | Si | Zn | Ca | Cu | Al | S |
|---|---|---|---|---|---|---|---|---|---|---|---|---|---|---|
| Experiment D1 (50°C) | Element Concentration | Leachate | g/L | 8.8 | 0.33 | <0.001 | <0.001 | <0.001 | <0.001 | <0.001 | <0.001 | <0.001 | <0.001 | 9.2 |
| | | Leach residue | mass% | 53 | 5.7 | <0.05 | 0.66 | <0.05 | <0.05 | <0.05 | <0.05 | <0.05 | <0.05 | 26 |
| | Leaching ratio | | % | 18.3 | 7.2 | - | 0 | - | - | - | - | - | - | 32.3 |
| Experiment D2 (50°C) | Element Concentration | Leachate | g/L | 18 | 0.92 | <0.001 | <0.001 | <0.001 | <0.001 | 0.006 | <0.001 | <0.001 | <0.001 | 20 |
| | | Leach residue | mass% | 54 | 6.9 | <0.05 | 0.91 | <0.05 | <0.05 | <0.05 | <0.05 | <0.05 | <0.05 | 30 |
| | Leaching ratio | | % | 44.7 | 24.5 | - | 0 | - | - | 100 | - | - | - | 61. 8 |
| Experiment D3 (50°C) | Element Concentration | Leachate | g/L | 19 | 1.3 | <0.001 | 0.039 | 0.005 | 0.002 | 0.003 | <0.001 | <0.001 | <0.001 | 9.8 |
| | | Leach residue | mass% | 59 | 5.1 | <0.05 | 0.53 | <0.05 | <0.05 | <0.05 | <0.05 | <0.05 | <0.05 | 36 |
| | Leaching ratio | | % | 45.1 | 39.4 | - | 15.8 | 100 | 100 | 100 | - | - | - | 41.0 |

[Table 7-2]

| Experiment | | | | | | | | | | | | | | |
|---|---|---|---|---|---|---|---|---|---|---|---|---|---|---|
| Experiment D4 (20°C) | Element Concentration | Leachate | g/L | 13 | 0.8 | <0.001 | 0.034 | 0.005 | <0.001 | 0.002 | <0.001 | <0.001 | <0.001 | 6.3 |
| | | Leach residue | mass% | 59 | 5 | <0.05 | 0.41 | <0.05 | <0.05 | <0.05 | <0.05 | <0.05 | <0.05 | 36 |
| | Leaching ratio | | % | 27.7 | 21.6 | - | 12.6 | 100 | - | 100 | - | - | - | 23.4 |
| Experiment D6 (50°C) | Element concentration | Leachate | g/L | 7.6 | 0.009 | - | - | - | - | - | - | - | - | - |
| | Leaching ratio | | % | 14.6 | 0.2 | - | - | - | - | - | - | - | - | - |
| Experiment D7 (20°C) | Element concentration | Leachate | g/L | 7.6 | 0.009 | - | - | - | - | - | - | - | - | - |
| | Leaching ratio | | % | 14.6 | 0.2 | - | - | - | - | - | - | - | - | - |

[Reference Example 6] (Thermal decomposition precipitation test of leachate of Ni/Co mixed sulfide (MS))

An aqueous solution containing 28.82 g of ammonium carbonate (($NH_4$)$_2CO_3$) was added to a container containing 185 mL of pure water and 15 mL of ammonia water having a concentration of 25 mass% to prepare an ammonia-containing aqueous solution having an ammonium carbonate concentration of 1.5 mol/L. The obtained ammonia-containing aqueous solution was mixed with 18 g of a powdery nickel/cobalt mixed sulfide (MS) having a composition shown above in Table 6 to prepare a slurry. The obtained slurry was maintained at a liquid temperature of 20°C for 2 hours while being stirred with a stirrer to perform leaching treatment.

After the leaching treatment, a leach residue was removed by solid-liquid separation through filtration, the thus obtained leachate composed of an ammonia solution of nickel and cobalt was placed in a 500-mL separable flask, and the liquid level of the leachate was marked so that the volume of the liquid could be checked. Then, the leachate was started to be stirred with a hot stirrer while being heated to a temperature of 80°C or more, and pure water was added thereto to make-up water that is lost through evaporation. From the time point when the temperature was confirmed to have reached 80°C, thermal decomposition treatment was performed for 6 hours. The thus obtained slurry containing a precipitate was filtered through a filter to separate and collect nickel/cobalt mixed hydroxide from the post-decomposition liquid. The obtained hydroxide was dried and then subjected to quantitative analysis by inductively-coupled plasma atomic emission spectrometry (ICP-AES), and as a result, the collection ratio of nickel as a hydroxide was 70.8%, and the collection ratio of cobalt as a hydroxide was 85.8%.

[Example 1]

A nickel/cobalt mixed hydroxide (MHP) as a raw material was treated according to a block flowchart shown in FIG. 1. Specifically, in the water washing process, 400 g (dry weight) of MHP as a raw material and 1.85 L of pure water were first placed in a beaker, and a resultant was stirred and mixed while being maintained at a water temperature of 20°C to perform water washing treatment.

Then, in the first alkali washing process, 381.4 g (dry weight) of MHP obtained by the above water washing treatment and 1.55 L of an 8.0 mol/L aqueous sodium hydroxide solution were both placed in a beaker, and a resultant was stirred and mixed while being adjusted to a temperature of 20°C to perform alkali washing. A washing time was set to 0.50 hours.

Then, in the leaching process, 183 g (dry weight) of MHP subjected to alkali washing in the first alkali washing process was placed in a beaker together with 1.0 L of an aqueous ammonia solution having a concentration of 25%, 0.6 L of pure water, and 253 g of ammonium hydrogen carbonate, and a resultant was stirred and mixed while being adjusted to a temperature of 20°C to perform leaching treatment. At this time, the concentration of ammonium hydrogen carbonate was 2.0 mol/L.

Then, in the thermal decomposition precipitation process, 1.6 L of a leachate obtained by the leaching treatment was placed in a beaker and heated to a temperature of 80°C and maintained at this temperature for 2.0 hours to perform thermal decomposition treatment, thereby generating a nickel/cobalt mixed hydroxide. The leachate was kept stirred during the time when it was maintained at the above-described heating temperature. Then, solid-liquid separation was performed to obtain a nickel/cobalt mixed hydroxide as a solid phase and a post-solid-liquid separation liquid as a liquid phase.

Finally, in the second alkali washing process, 89 g (dry weight) of the nickel/cobalt mixed hydroxide obtained in the thermal decomposition precipitation process was placed in a beaker together with 0.83 L of an 8.0 mol/L aqueous sodium hydroxide solution, and a resultant was stirred and mixed while being adjusted to a temperature of 20°C to perform alkali washing. A washing time was set to 0.50 hours. The MHP used as a raw material and the intermediate products generated in each of the series of processes described above were subjected to quantitative analysis by inductively-coupled plasma atomic emission spectrometry (ICP-AES). The thus determined their compositions (grades) are shown below in Table 8.

[Table 8]

|  | Grade (mass%) | | | | | | |
|---|---|---|---|---|---|---|---|
|  | Ni | Co | Mg | Zn | Ca | S | C |
| MHP (raw material) | 37 | 3.1 | 1.6 | 0.67 | 0.2 | 4.9 | - |
| MHP (after water washing process) | 40 | 3.2 | 0.59 | 0.71 | 0.072 | 3.8 | - |
| MHP (after first alkali washing process) | 39 | 3.2 | 0.49 | 0.17 | 0.063 | 0.3 | - |
| Leach residue (after leaching process) | 34 | 6.7 | 1.8 | 0.09 | 0.17 | 0.094 | - |

(continued)

| | Grade (mass%) | | | | | | |
|---|---|---|---|---|---|---|---|
| | Ni | Co | Mg | Zn | Ca | S | C |
| Leachate (after leaching process) | 25 | 1.1 | 0.011 | 0.13 | 0.013 | 0.27 | 8.9 |
| Ni/Co mixed hydroxide (after thermal decomposition precipitation process) | 44 | 1.8 | 0.017 | 0.22 | 0.02 | <0.005 | 5.5 |
| Post-solid-liquid separation liquid (after thermal decomposition precipitation process) | 0.072 | 0.16 | <0.001 | <0.001 | <0.001 | 0.3 | 8.9 |
| Ni/Co mixed hydroxide (after second alkali washing process) | 54 | 2.2 | 0.023 | 0.25 | 0.029 | <0.005 | 0.75 |

The results shown above in Table 8 confirmed that even when a raw material containing a relatively large amount of impurities in addition to nickel and cobalt as target metals was used, a nickel- and cobalt-containing hydroxide having a grade usable as a precursor of a positive electrode active material for lithium ion batteries could be produced by sequentially performing the processes which satisfying the requirements of the present invention, the processes including: the water washing process, the first alkali washing process, the leaching process, the thermal decomposition precipitation process, and the second alkali washing process.

[Example 2]

Example 2 was performed in the same manner as Example 1 except that the ammonium hydrogen carbonate used in the leaching process in Example 1 was changed to ammonium carbonate. As a result, a nickel/cobalt mixed hydroxide obtained through the second alkali washing process was confirmed to have a grade almost comparable to that shown above in Table 8.

This confirms that even when a raw material containing a relatively large amount of impurities in addition to nickel and cobalt as target metals is used and ammonium carbonate is used instead of ammonium hydrogen carbonate, a nickel- and cobalt-containing hydroxide usable as a precursor of a positive electrode active material for lithium ion batteries can be produced by sequentially performing the water washing process, the first alkali washing process, the leaching process, the thermal decomposition precipitation process, and the second alkali washing process, which satisfies the requirements of the present invention.

**Claims**

1. A method for producing a nickel- and cobalt-containing hydroxide, the method comprising:

a water washing process in which a nickel/cobalt mixed hydroxide in a particulate form is washed with water;
a first alkali washing process in which the nickel/cobalt mixed hydroxide washed with water is washed for 0.50 hours or more and 2.0 hours or less with an aqueous sodium hydroxide solution having sodium hydroxide concentration of 1.0 mol/L or more and 8.0 mol/L or less and having liquid temperature of 10°C or more and 90°C or less;
a leaching process in which the nickel/cobalt mixed hydroxide washed in the first alkali washing process is subjected to leaching treatment in a slurry state at a temperature of 0°C or more and 60°C or less using an ammonia-containing aqueous solution containing ammonia water having an ammonium carbonate and/or ammonium hydrogen carbonate concentration of 0.50 mol/L or more and 4.1 mol/L or less;
a thermal decomposition precipitation process in which a nickel- and cobalt-containing leachate obtained by the leaching treatment is heated at 60°C or more and 100°C or less for 0.50 hours or more and 2.0 hours or less to deposit these nickel and cobalt as a hydroxide; and
a second alkali washing process in which the deposited hydroxide is washed for 0.50 hours or more and 2.0 hours or less with an aqueous sodium hydroxide solution having sodium hydroxide concentration of 1.0 mol/L or more and 8.0 mol/L or less and having liquid temperature of 10°C or more and 90°C or less.

2. The method for producing a nickel- and cobalt-containing hydroxide according to claim 1, wherein in the thermal decomposition precipitation process, air is blown into the leachate.

3. The method for producing a nickel- and cobalt-containing hydroxide according to claim 1 or 2, wherein the aqueous sodium hydroxide solution used in the first alkali washing process and/or the second alkali washing process has a sodium hydroxide concentration of 4.0 mol/L or more and 8.0 mol/L or less and a liquid temperature of 70°C or more and 90°C or less.

Ni/Co MIXED HYDROXIDE (MHP)

→ WATER

WATER WASHING PROCESS

ALKALI WASHING LIQUID → → WASTEWATER (Ca, Mg)

FIRST ALKALI WASHING PROCESS

WASHING WASTEWATER ← → NH₃+NH₄HCO₃ AQUEOUS SOLUTION

LEACHING PROCESS

IMPURITY REMOVAL → LEACH RESIDUE (Mn, Fe, Al)

LEACHATE

Zn, S, Si → NH₃, CO₂

THERMAL DECOMPOSITION
PRECIPITATION PROCESS

→ POST-SOLID-LIQUID
SEPARATION LIQUID

FIG. 1-1

Ni/Co MIXED HYDROXIDE BEFORE WASHING

ALKALI WASHING LIQUID

SECOND ALKALI WASHING PROCESS

WASHING WASTEWATER

WASHED Ni/Co MIXED HYDROXIDE

(PURIFIED Ni/Co MIXED HYDROXIDE)

CARBON REMOVAL

CARBON

FIG. 1-2

## INTERNATIONAL SEARCH REPORT

| International application No. |
| --- |
| **PCT/JP2024/022135** |

**A. CLASSIFICATION OF SUBJECT MATTER**

*C01G 53/00*(2006.01)i; *C01G 53/04*(2006.01)i; *C22B 3/14*(2006.01)i; *C22B 3/44*(2006.01)i; *C22B 23/00*(2006.01)n
FI:  C01G53/00 A; C01G53/04; C22B3/14; C22B3/44 101Z; C22B23/00 102

According to International Patent Classification (IPC) or to both national classification and IPC

**B. FIELDS SEARCHED**

Minimum documentation searched (classification system followed by classification symbols)

C01G53/00 - 53/12; C01G51/00 - 51/12; C22B3/00 - 3/46; C22B23/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2012/020768 A1 (SEIMI CHEMICAL CO., LTD.) 16 February 2012 (2012-02-16) entire text | 1-3 |
| A | JP 2006-522866 A (BHP BILLITON SSM TECHNOLOGY PTY. LTD.) 05 October 2006 (2006-10-05) entire text | 1-3 |
| A | WO 2020/196046 A1 (SUMITOMO METAL MINING CO., LTD.) 01 October 2020 (2020-10-01) entire text | 1-3 |

☐ Further documents are listed in the continuation of Box C.　☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **15 August 2024** | **27 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/022135**

| Patent document cited in search report | | | Publication date (day/month/year) | Patent family member(s) | | | Publication date (day/month/year) |
|---|---|---|---|---|---|---|---|
| WO | 2012/020768 | A1 | 16 February 2012 | (Family: none) | | | |
| JP | 2006-522866 | A | 05 October 2006 | US | 2007/0166214 | A1 | |
| | | | | entire text | | | |
| | | | | WO | 2004/090176 | A1 | |
| | | | | EP | 1613785 | A1 | |
| | | | | CN | 1774518 | A | |
| WO | 2020/196046 | A1 | 01 October 2020 | US | 2022/0154308 | A1 | |
| | | | | entire text | | | |
| | | | | EP | 3950085 | A1 | |
| | | | | CN | 113474069 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10324524 A